# EUROPÄISCHE PATENTANMELDUNG

(11) **EP 4 810 345 A1**
(43) Veröffentlichungstag der Anmeldung: **23.09.2026**
(21) Anmeldenummer: 26156953.7
(22) Anmeldetag: 06.02.2026
(51) Int. Cl.: B62B 3/00, B62B 3/02

(54) **ROLLBEHÄLTER**

(30) Priorität: 19.03.2025 DE 202025101488 U
(71) Anmelder: Pilsl Transportgeräte GmbH, 94110 Wegscheid (DE)
(72) Erfinder: Pilsl, Christian, 94107 Untergriesbach (DE)
(74) Vertreter: advotec.

(57) **Zusammenfassung**

Die Erfindung betrifft einen Rollbehälter, insbesondere Rollpalette, umfassend einen Behälterboden (3, 19, 20) und mindestens eine Seitenwand (2), welche mittels mindestens einer Befestigungsanordnung (4) an dem Behälterboden (3, 19, 20) lösbar fixierbar ist, dadurch gekennzeichnet, dass die Befestigungsanordnung (4) ein an dem Behälterboden (3, 19, 20) rotierbar gelagertes Sicherungselement (6) und einen an dem Sicherungselement (6) rotierbar gelagerten Verbindungsbügel (5) umfasst, wobei das Sicherungselement (6) zwischen einer Sicherungsposition, in welcher der Verbindungsbügel (5) die Seitenwand (2) derart umgreift, dass die Seitenwand (2) an dem Behälterboden (3, 19, 20) fixiert ist, und einer Freigabeposition rotierbar ist, in der die Seitenwand (2) freigebbar ist.

## Beschreibung

Die vorliegende Erfindung betrifft einen Rollbehälter, insbesondere eine Rollpalette, umfassend einen Behälterboden und mindestens eine, insbesondere zwei sich gegenüberliegende Seitenwände. Die Seitenwände sind jeweils mittels mindestens einer Befestigungsanordnung an dem Behälterboden fixiert.

Rollbehälter sind in verschiedenen Ausgestaltungsformen aus dem Stand der Technik bekannt. Die bekannten Rollbehälter umfassen regelmäßig einen Behälterboden und zwei sich gegenüberliegende Seitenwände, welche an dem Behälterboden fixiert sind. Zur Fixierung der Seitenwände an den Behälterböden ist es aus dem Stand der Technik bekannt, Fallbügel vorzusehen, welche an den Seitenwänden angeordnet sind. Die Fallbügel sind zur Fixierung der Seitenwände an Behälterböden an diesen verrastbar. Zur Lagerung und zum Transport von leeren Rollbehältern werden die Seitenwände regelmäßig von den Bodenbehältern demontiert und gestapelt. Da die Fallbügel von den Seitenwänden hervorstehen, gestaltet sich ein Stapeln der Seitenwände jedoch als schwierig.

Aufgabe der vorliegenden Erfindung ist es, einen Rollbehälter bereitzustellen, bei welchem mindestens eine Seitenwand sicher an einem Behälterboden lösbar fixierbar ist und welcher in einem demontierten Zustand auf einfache Weise mit geringem Platzbedarf lagerbar und transportierbar ist.

Diese Aufgabe ist erfindungsgemäß durch den Rollbehälter mit den Merkmalen des Anspruchs 1 gelöst.

Erfindungsgemäß wird also ein Rollbehälter bereitgestellt, insbesondere eine Rollpalette, umfassend einen Behälterboden und mindestens eine Seitenwand, insbesondere zwei sich gegenüberliegende Seitenwände. Die mindestens eine Seitenwand ist mittels mindestens einer Befestigungsanordnung an dem Behälterboden lösbar fixierbar. Die Befestigungsanordnung weist ein an dem Behälterboden bewegbar gelagertes Sicherungselement und einen Verbindungsbügel auf. Der Verbindungsbügel ist an dem Sicherungselement rotierbar gelagert. Das Sicherungselement ist zwischen einer Sicherungsposition und einer Freigabeposition rotierbar. In der Sicherungsposition umgreift der Verbindungsbügel die Seitenwand, insbesondere eine untere Querstrebe der Seitenwand, derart, dass die Seitenwand an dem Behälterboden fixiert ist, wobei der Verbindungsbügel, wenn das Sicherungselement in der Sicherungsposition ist, insbesondere unverschwenkbar ist. Befindet sich die Befestigungsanordnung hingegen in der Freigabeposition, ist die Seitenwand freigegeben. In der Freigabeposition ist der Verbindungsbügel insbesondere derart verschwenkbar, dass die Seitenwand von dem Behälterboden entfernbar ist.

Kerngedanke der Erfindung ist es also, die Befestigungsanordnung an dem Behälterboden vorzusehen, insbesondere zu lagern, und diese derart auszugestalten, dass mittels der Befestigungsanordnung die Seitenwand lösbar an dem Behälterboden fixierbar ist. Durch das Vorsehen der Befestigungsanordnung an dem Bodenelement sind die Seitenwände in demontiertem Zustand in kompakter Form lagerbar und transportierbar.

Bei einer beispielhaften Ausführungsform des Rollbehälters nach der Erfindung ist das Sicherungselement in der Sicherungsposition in einer seitlichen Aussparung des Behälterbodens angeordnet, bevorzugt vollständig, weiter bevorzugt derart, dass diese zumindest teilweise flächenbündig mit einer Betreffenden der Seitenwände des Behälterbodens abschließt.

Bei einer bevorzugten Ausführungsform des Rollbehälters nach der Erfindung umfasst das Sicherungselement zwei Führungsstifte.

Die Führungsstiftlängsmittelachsen der Führungsstifte können einander entsprechen. Beispielsweise erstrecken sich Führungsstiftlängsmittelachsen in die gleiche Richtung wie eine untere Querstrebe der Seitenwand.

Die Führungsstifte können jeweils in einer Einkerbung mit kreisrundem Querschnitt, insbesondere einer Bohrung, des Behälterbodens um eine Führungsstiftlängsmittelachse rotierbar gelagert sein.

An die Bohrungen grenzen beispielsweise jeweils eine Führungsnut an. Die Bohrungen und/oder die Führungsnuten sind beispielsweise an Aussparungsseitenwänden vorgesehen, welche die Aussparung seitlich begrenzen.

Beispielsweise sind die Bohrungen und/oder die Führungsnuten (jeweils) zueinander spiegelsymmetrisch ausgebildet.

Die Führungsstifte sind beispielsweise in den Führungsnuten in Längserstreckungsrichtung der Führungsnuten verschiebbar. Die Führungsstifte sind somit durch die Führungsnuten in die Bohrungen einbringbar.

Beispielsweise sind die Bohrungen zumindest geringfügig tiefer, weisen also eine größere Erstreckung in Bohrungsachsrichtung auf, als die Führungsnuten.

Die Führungsnuten können an einer der Aussparung abgewandten Seite von einem Führungsnutboden begrenzt sein. Beispielsweise entspricht ein Abstand der Führungsnutböden zumindest annähernd einem Abstand der sich abgewandten Enden der Führungsstifte. Die Führungsnutböden sind also beispielsweise derart voneinander beabstandet, dass die Führungsstifte bei einer Montage oder einer Demontage der Befestigungsanordnung von dem Behälterboden, jeweils an einem betreffenden der Führungsnutböden anliegen. Zum Entfernen des Sicherungselements aus den Bohrungen ist das Sicherungselement also mit einer Kraft zu beaufschlagen, welche größer ist als eine Reibungskraft zwischen den Führungsstiften und Führungsnutböden.

Mindestens einer der Führungsstifte, insbesondere die Führungsstifte, können (jeweils) in einer betreffenden der Bohrungen mittels einer Rastnase und/oder eines Rasthakens gesichert sein.

Die Rastnase und/oder der Rasthaken können/kann an dem Führungsstift oder an dem Behälterboden zwischen einer ersten Position, in welcher die Rastnase bzw. der Rasthaken den Führungsstift in der Bohrung sichert, und einer zweiten Position bewegbar gelagert sein. In der zweiten Position ist der Führungsstift beispielsweise in die Bohrung einbringbar und/oder aus der Bohrung ausbringbar. Die Bohrung kann durch den Rasthaken zumindest teilweise von der Führungsnut abgrenzbar sein. Insbesondere ist die Bohrung beispielsweise zumindest teilweise von der Führungsnut abgegrenzt, wenn der Rasthaken in der ersten Position ist.

Bei Anordnung der Führungsstifte in den Bohrungen, entsprechen die Führungsstiftlängsmittelachsen beispielsweise den Bohrungsachsrichtungen.

Bei einer beispielhaften Ausführungsform des Rollbehälters nach der Erfindung erstrecken sich die Führungsnuten in Rollbehälter-Hochrichtung nach unten und in Rollbehälter-Querrichtung nach außen, d.h. von einer Rollbehälter-Längsmittelebene weg, insbesondere in Richtung einer offenen Seite der Aussparung.

Beispielsweise ist die Befestigungsanordnung derart ausgestaltet, dass eine Gewichtskraft des Sicherungselements, das Sicherungselement, wenn keine externe Kraft auf dieses wirkt, eigenständig aus der Freigabeposition in Richtung der Sicherungsposition bewegt.

Beispielsweise sind die Führungsnuten bogenförmig, insbesondere kreisbogenförmig. Es ist ebenfalls denkbar, dass die Führungsnuten eine längliche, bevorzugt eine gerade, weiter bevorzugt eine diagonale, insbesondere nach außen-unten zeigende, Erstreckung aufweisen.

Bei einer beispielhaften Ausführungsform des Rollbehälters nach der Erfindung umfasst das Sicherungselement ein Rastelement, insbesondere eine Rastnase. Das Rastelement liegt in der Sicherungsposition derart an einem Rastgegenelement des Behälterbodens an, dass das Sicherungselement in der Sicherungsposition gesichert ist.

Das Rastgegenelement ist beispielsweise in der Aussparung angeordnet.

Beispielsweise verjüngt sich das Rastelement in Richtung eines dem Rastgegenelement zugewandten Endes.

Das Rastelement kann ein abgerundetes, liegend, V-förmiges Querschnittsprofil oder ein liegend, U-förmiges Querschnittsprofil aufweisen. Abweichende Querschnittsprofile sind ebenfalls denkbar.

Bei einer beispielhaften Ausführungsform des Rollbehälters nach der Erfindung umfasst das Bodenelement, insbesondere in der Aussparung, ein Führungselement. An dem Führungselement liegt das Sicherungselement, insbesondere das Rastelement des Sicherungselements, bei einer Bewegung aus der Sicherungsposition in die Freigabeposition sowie in der Freigabeposition, nicht aber in der Sicherungsposition selbst, an. Das Rastelement liegt beispielsweise in der Sicherungsposition an dem Rastelement an und im Übrigen, das heißt bei einem Bewegen aus der Sicherungsposition in die Freigabeposition und in der Freigabeposition, an dem Führungselement.

Das Führungselement kann einen konvexen Bereich, also einen nach außen gewölbten Bereich, und einen konkaven Bereich, das heißt einen nach innen gewölbten Bereich, aufweisen.

Beispielsweise grenzt der konvexe Bereich in Rollbehälter-Hochrichtung oben an den konkaven Bereich an.

Bei einer bevorzugten Ausführungsform des Rollbehälters nach der Erfindung ist das Führungselement derart ausgestaltet, dass das Sicherungselement bei einer Bewegung zwischen der Sicherungsposition und der Freigabeposition um die Führungsstiftlängsmittelachsen rotiert wird.

Beispielsweise ist das Führungselement derart ausgestaltet, dass ein oberhalb der Führungsstifte befindlicher Bereich des Sicherungselements bei einer Bewegung aus der Sicherungsposition in die Freigabeposition um die Führungsstiftlängsmittelachsen in Richtung des Behälterbodens rotiert wird.

Bei einer bespielhaften Ausführungsform des Rollbehälters nach der Erfindung grenzt das Führungselement an das Rastgegenelement in Rollbehälter-Hochrichtung oben an.

Das Führungselement und das Rastelement sind beispielsweise einteilig ausgebildet.

Beispielsweise ist der Behälterboden einteilig ausgebildet und umfasst das Führungselement und das Rastelement.

Bei einer bespielhaften Ausführungsform des Rollbehälters nach der Erfindung ist das Sicherungselement in der Sicherungsposition mittels mindestens eines Pins und/oder mindestens einer Schraube an dem Behälterboden derart sicherbar, dass eine Rotation des Sicherungselements in die Freigabeposition ausgeschlossen ist.

Der Pin bzw. die Schraube kann sich durch eine Bohrung in dem Behälterboden und durch eine Bohrung in dem Sicherungselement erstrecken.

Bei einer bevorzugten Ausführungsform des Rollbehälters nach der Erfindung umfasst das Sicherungselement einen Lagerstift, welcher sich parallel zu den Führungsstiften erstreckt. An dem Lagerstift ist der Verbindungsbügel um eine Lagerstiftlängsmittelachse rotierbar gelagert.

Der Lagerstift ist beispielsweise in einer Einkerbung des Sicherungselements angeordnet, insbesondere derart, dass dieser umfangsseitig freiliegt. Hierdurch ist der Verbindungsbügel rotierbar an dem Verbindungsbügel lagerbar.

Bei einer beispielhaften Ausführungsform des Rollbehälters nach der Erfindung grenzen an den Lagerstift in Lagerstiftlängserstreckungsrichtung endseitig die Führungsstifte und/oder das Rastelement an.

Beispielsweise ist das Rastelement zweiteilig ausgestaltet und ist an beiden Seiten in Lagerstiftlängserstreckungsrichtung endseitig des Lagerstiftes angeordnet.

Beispielsweise ist die Lagerstiftlängsmittelachse von den Führungsstiftlängsmittelachsen beabstandet.

Bei einer beispielhaften Ausführungsform des Rollbehälters nach der Erfindung umfasst der Verbindungsbügel ein C-förmiges Querschnittsprofil.

Beispielsweise umfasst der Verbindungsbügel einen Lagerbereich, einen Sicherungsbereich und einen den Lagerbereich mit dem Sicherungsbereich verbindenden Verbindungsbereich.

Der Lagerbereich und der Sicherungsbereich können jeweils halbkreisförmig oder U-förmig ausgestaltet sein.

Der Durchmesser des Lagerbereichs ist beispielsweise kleiner als der Durchmesser des Sicherungsbereichs.

Der Durchmesser des Lagerbereichs kann mit einem Durchmesser des Lagerstiftes korrespondieren. Insbesondere kann der Durchmesser des Lagerbereichs geringfügig größer sein als der Durchmesser des Lagerstiftes, so dass der Verbindungsbügel rotierbar an dem Lagerstift lagerbar ist.

Der Sicherungsbereich weist beispielsweise einen Durchmesser auf, der geringfügig größer ist als ein Durchmesser der unteren Querstrebe der Seitenwand. Somit kann der Verbindungsbügel die untere Querstrebe der Seitenwand zur Fixierung der Seitenwand an dem Bodenbehälter umgreifen.

Beispielsweise umfasst das Sicherungselement ein Griffelement oder einen Griffbereich zum Bewegen des Sicherungselements zwischen der Sicherungsposition und der Freigabeposition.

Der Griffbereich umfasst beispielsweise Einkerbungen, so dass ein Nutzer in die Aussparung greifen kann, um das Sicherungselement aus der Sicherungsposition in die Freigabeposition zu bewegen.

Bei einer bevorzugten Ausführungsform des Rollbehälters nach der Erfindung umfasst der Behälterboden eine, insbesondere längliche, Einkerbung, in welcher die untere Querstrebe der Seitenwand angeordnet ist.

Die Seitenwand ist beispielsweise eine Gitterwand, umfassend Querstreben und Längsstreben.

Bei einer bevorzugten Ausführungsform der Erfindung umfasst der Rollbehälter zwei, drei oder vier Seitenwände, welche jeweils mittels mindestens einer Befestigungsanordnung an dem Behälterboden lösbar fixierbar sind.

Beispielsweise ist die mindestens eine Seitenwand mittels zwei, drei, vier oder mehr Befestigungsanordnungen an dem Behälterboden lösbar fixierbar.

Die Erfindung ist im Folgenden anhand in der Zeichnung dargestellter Ausführungsbeispiele näher erläutert. Es zeigt:
- Figur 1: eine perspektivische Ansicht eines Teilbereichs eines Rollbehälters nach einer ersten Ausführungsform der Erfindung mit Sicherungselementen in einer Sicherungsposition;
- Figur 2: eine Figur 1 entsprechende Ansicht, wobei die Sicherungselemente in einer Zwischenposition sind;
- Figur 3: einen Teilbereich einer Schnittansicht durch den Rollbehälter aus Figur 1 entlang der Linie I-I;
- Figur 4: eine Figur 3 entsprechende Ansicht, wobei das Sicherungselement in einer Zwischenposition ist;
- Figur 5: eine Figur 3 entsprechende Ansicht, wobei das Sicherungselement in einer weiteren Zwischenposition ist;
- Figur 6: eine Figur 3 entsprechende Ansicht, wobei das Sicherungselement in einer Freigabeposition ist;
- Figur 7: eine Figur 6 entsprechende Ansicht, wobei eine Seitenwand entfernt ist;
- Figur 8: eine perspektivische Ansicht des Sicherungselements in Alleindarstellung;
- Figur 9: eine weitere perspektivische Ansicht des Sicherungselements in Alleindarstellung;
- Figur 10: eine perspektivische Ansicht eines Verbindungsbügels in Alleindarstellung;
- Figur 11: eine perspektivische Ansicht eines Behälterbodens eines Rollbehälters nach einer zweiten Ausführungsform der Erfindung; und
- Figur 12: eine perspektivische Ansicht eines Behälterbodens eines Rollbehälters nach einer dritten Ausführungsform der Erfindung.

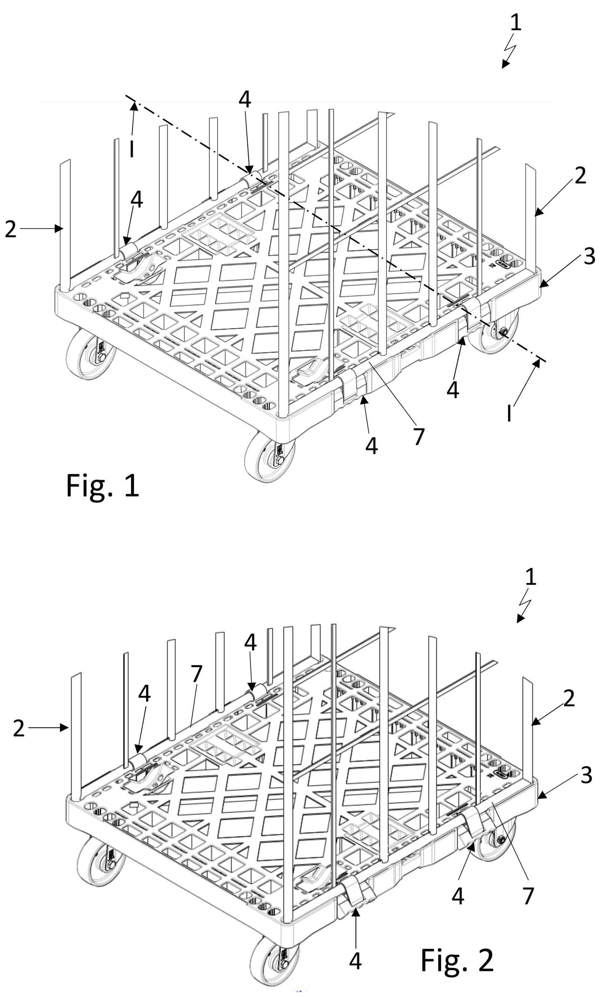

In den Figuren 1 bis 7 ist ein Rollbehälter 1 nach einer ersten Ausführungsform der vorliegenden Erfindung dargestellt. Der Rollbehälter 1 umfasst einen Behälterboden 3, zwei Seitenwände 2 und vier Befestigungsanordnungen 4. Die Seitenwände 2 sind an in Rollbehälter-Querrichtung gegenüberliegenden Seiten des Behälterbodens 3 in Aussparungen 14 des Behälterbodens 3 angeordnet sind. Die Seitenwände 2 sind jeweils über zwei Befestigungsanordnungen 4 an dem Behälterboden 3 lösbar fixiert.

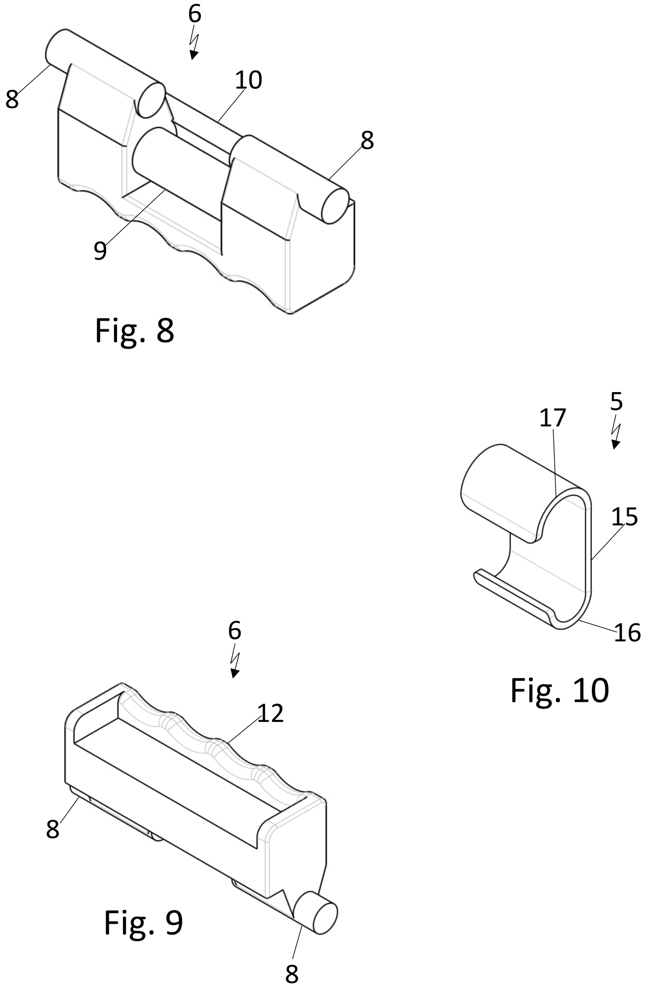

Die Befestigungsanordnungen 4 umfassen jeweils ein Sicherungselement 6 und einen Verbindungsbügel 5. Das Sicherungselement 6 ist in Alleindarstellung in den Figuren 8 und 9 gezeigt. Figur 10 zeigt den Verbindungsbügel 5 in Alleindarstellung.

Das Sicherungselement 6 weist zwei Führungsstifte 8 auf, welche in Bohrungen des Behälterbodens 3 rotierbar gelagert sind. Die Führungsstifte 8 sind durch Führungsnuten, welche an die Bohrungen angrenzen, in die Bohrungen einbringbar. Die Bohrungen und die Führungsnuten sind in Seitenwänden vorgesehen, welche eine Aussparung 18, in der die Befestigungsanordnung 4 anordenbar ist, seitlich begrenzen. Die Bohrungen und die Führungsnuten sind jeweils spiegelsymmetrisch zueinander ausgebildet. Die Führungsnuten erstrecken sich in Rollbehälter-Hochrichtung nach unten und/oder in Rollbehälter-Querrichtung nach außen.

Die rotierbare Lagerung der Führungsstifte 8 in den Bohrungen ermöglicht eine Bewegung des Sicherungselements 6 zwischen einer Sicherungsposition und einer Freigabeposition. In der Sicherungsposition ist das Sicherungselement 6 derart in der Aussparung 18 angeordnet ist, dass es flächenbündig mit einer Seitenwand des Behälterbodens 3 abschließt. In der Freigabeposition ist das Sicherungselement 6 zumindest teilweise außerhalb der Aussparung 18 angeordnet.

Das Sicherungselement 6 umfasst ein Rastelement 10. Das Rastelement 10 ist derart mit einem Rastgegenelement 11 des Behälterbodens 3, welches insbesondere an einer die Aussparung 18 innenseitig begrenzenden Wand ausgebildet ist, in Eingriff bringbar, dass das Sicherungselement 6 in der Sicherungsposition fixiert ist. Zum Entfernen des Sicherungselements 6 aus der Sicherungsposition ist demnach eine externe Kraft erforderlich, welche eine zwischen dem Rastelement 10 und dem Rastgegenelement 11 wirkende Kraft übersteigt.

Es ist ebenfalls denkbar, das Sicherungselement 6 in der Sicherungsposition mittels eines Pins und/oder einer Schraube gegen eine Rotation in die Freigabeposition zu sichern.

Das Sicherungselement 6 umfasst ferner einen Lagerstift 9, dessen Längserstreckungsrichtung der Längserstreckungsrichtung der Führungsstifte 8 entspricht.

Wie aus Figur 9 ersichtlich ist, umfasst der Verbindungsbügel 5 einen ersten Anbindungsbereich 16, einen zweiten Anbindungsbereich 17 und einen den ersten Anbindungsbereich 16 mit dem zweiten Anbindungsbereich 17 verbindenden Verbindungsbereich. Der erste Anbindungsbereich 16 und der zweite Anbindungsbereich 17 weisen jeweils in einem Querschnitt ein halbkreisförmiges Profil auf, wobei deren offene Seiten einander zugewandt sind. Der erste Anbindungsbereich 16 umgreift den Lagerstift 9 derart, dass der Verbindungsbügel 5 um eine Lagerstiftlängsmittelachse rotierbar an dem Lagerstift 9 gelagert ist.

Das Sicherungselement 6 umfasst ein Rotationsbegrenzungselement 21 zur Begrenzung einer Rotationsbewegung des Verbindungsbügels in eine erste Richtung, insbesondere in eine von dem Behälterboden 3 wegweisende Richtung. Das Rotationsbegrenzungselement 21 und der Lagerstift 9 sind auf gegenüberliegenden Seiten des Verbindungsbügels 5 angeordnet. Insbesondere ist der Lagerstift 9 auf einer dem Behälterboden 3 zugewandten Seite des Verbindungsbügels 5 angeordnet und das Rotationsbegrenzungselement 21 ist an einer dem Behälterboden 3 abgewandten Seite des Verbindungsbügels 5 vorgesehen.

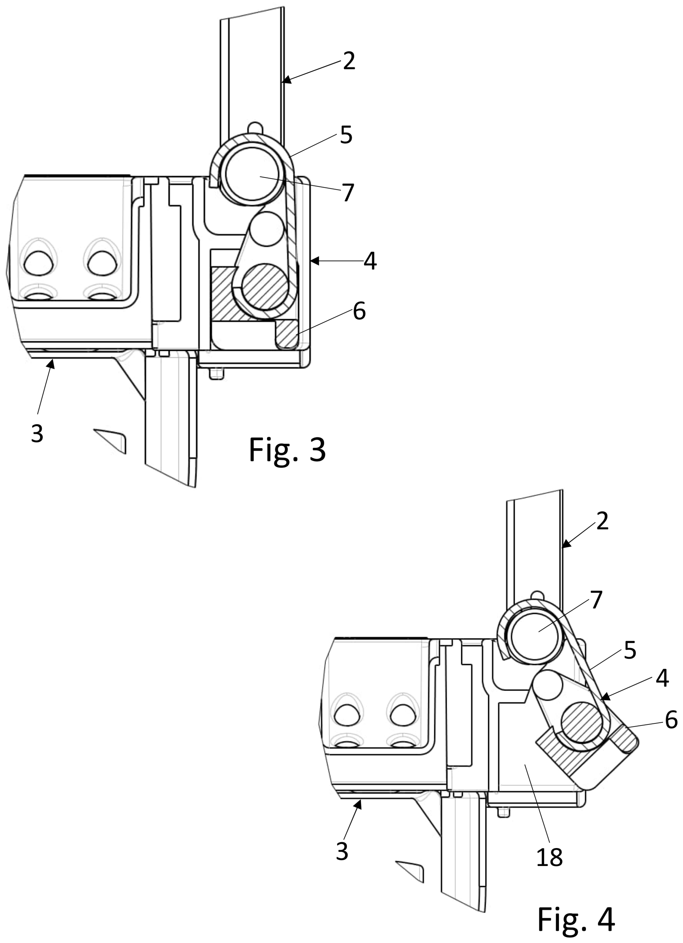

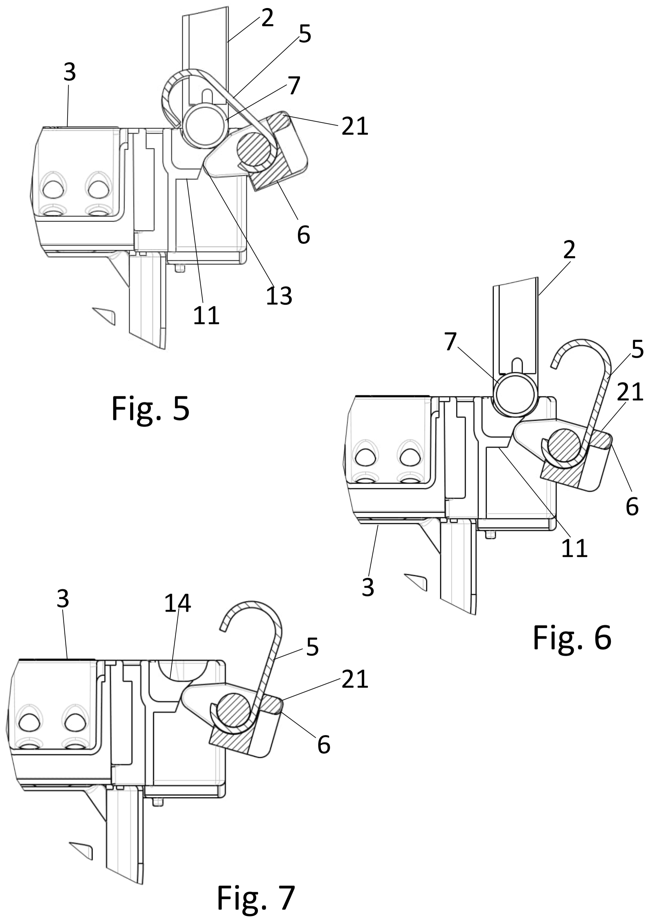

Wie aus einer Zusammenschau der Figuren 3 bis 7 ersichtlich ist, ist das Sicherungselement 6 aus der in Figur 3 gezeigten Sicherungsposition über in den Figuren 4 und 5 gezeigten Zwischenpositionen in eine in den Figuren 6 und 7 gezeigte Freigabeposition rotierbar.

In der Sicherungsposition liegt das Rastelement 10 derart an dem Rastgegenelement 11 an, dass das Sicherungselement 6 an dem Behälterboden 3 fixiert ist. Hierbei umgreift der zweite Anbindungsbereich 17 des Verbindungsbügels 5 derart eine untere Querstrebe 7 der Seitenwand 2, dass die Seitenwand 2 an dem Behälterboden 3 fixiert ist.

Bei einer Rotation des Sicherungselements 6 in Richtung der Freigabeposition, also bei einer Bewegung des Sicherungselements 6 aus der Aussparung 18 heraus, kommt das Rastelement 10 an einem Führungselement 13 zur Anlage, welches an das Rastgegenelement 11 angrenzt. Das Führungselement 13 weist insbesondere eine derartige Geometrie auf, dass das Sicherungselement 6 bei einer weiteren Rotation kontinuierlich an dem Führungselement 13 anliegt.

Wie aus den Figuren 6 und 7 ersichtlich ist, ist der Verbindungsbügel 5, wenn das Sicherungselement 6 in der Freigabeposition ist, derart rotiert, dass dieser die Querstrebe 7 freigibt, insbesondere in Rollbehälter-Hochrichtung nicht mit der Querstrebe fluchtet bzw. in Rollbehälter-Querrichtung von der Querstrebe 7 beabstandet ist. Das Rotationsbegrenzungselement 21 begrenzt hierbei eine Rotationsbewegung des Verbindungsbügels 5 in eine von der Querstrebe 7 wegweisende Richtung.

Zur erleichterten Betätigung des Sicherungselements 6 umfasst das Sicherungselement 6 einen Griffbereich 12.

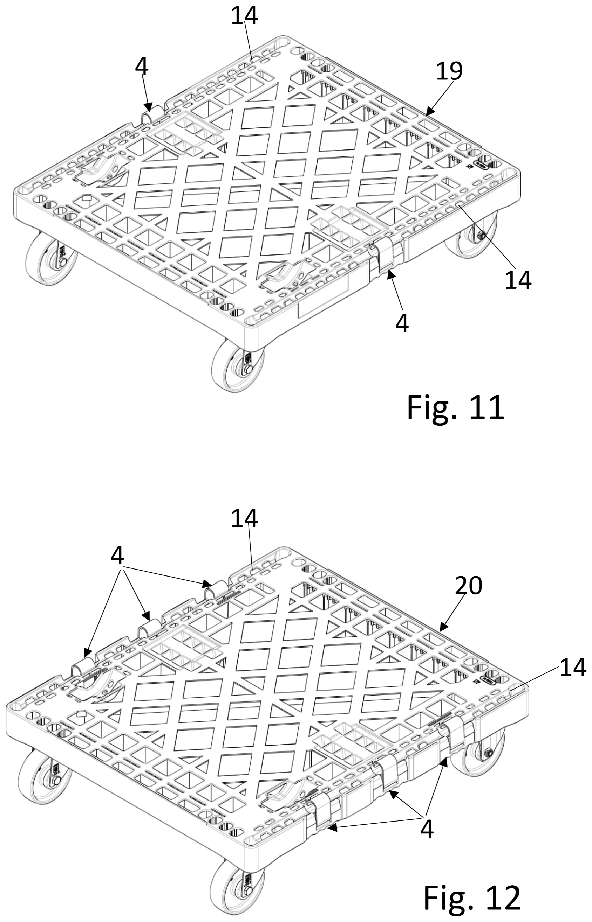

In den Figuren 11 und 12 sind Behälterböden 19 bzw. 20 eines Rollbehälters nach einer zweiten Ausführungsform der Erfindung bzw. eines Rollbehälters nach einer dritten Ausführungsform der vorliegenden Erfindung dargestellt. Die Rollbehälter nach der zweiten Ausführungsform und der dritten Ausführungsform entsprechen im Wesentlichen dem Rollbehälter 1 nach der ersten Ausführungsform. Mithin werden im Folgenden lediglich die Unterscheidungsmerkmale erläutert. Im Übrigen gelten die obigen Ausführungen entsprechend.

Der in Figur 11 gezeigte Behälterboden 19 unterscheidet sich von dem Behälterboden des Rollbehälters 1 nach der ersten Ausführungsform dadurch, dass dieser anstelle von vier Befestigungsanordnungen 4, zwei Befestigungsanordnungen 4 umfasst.

Der in Figur 12 gezeigte Behälterboden 20 umfasst seitlich hingegen jeweils drei Befestigungsanordnungen 4, also insgesamt sechs Befestigungsanordnungen 4.

Die Ausgestaltung der Befestigungsanordnungen 4 des Rollbehälters nach der zweiten Ausführungsform und des Rollbehälters nach der dritten Ausführungsform entspricht der Ausgestaltung der Befestigungsanordnungen 4 des Rollbehälters 1 nach der ersten Ausführungsform.

### Bezugszeichenliste:

- 1: Rollbehälter
- 2: Seitenwand
- 3: Behälterboden
- 4: Befestigungsanordnung
- 5: Verbindungsbügel
- 6: Sicherungselement
- 7: Querstrebe
- 8: Führungsstift
- 9: Lagerstift
- 10: Rastelement
- 11: Rastgegenelement
- 12: Griffelement
- 13: Führungselement
- 14: Einkerbung
- 15: Verbindungsbereich
- 16: erster Anbindungsbereich
- 17: zweiter Anbindungsbereich
- 18: Aussparung
- 19: Behälterboden
- 20: Behälterboden
- 21: Rotationsbegrenzungselement

## Patentansprüche

1. Rollbehälter, insbesondere Rollpalette, umfassend einen Behälterboden (3, 19, 20) und mindestens eine Seitenwand (2), welche mittels mindestens einer Befestigungsanordnung (4) an dem Behälterboden (3, 19, 20) lösbar fixierbar ist, **dadurch gekennzeichnet, dass** die Befestigungsanordnung (4) ein an dem Behälterboden (3, 19, 20) rotierbar gelagertes Sicherungselement (6) und einen an dem Sicherungselement (6) rotierbar gelagerten Verbindungsbügel (5) umfasst, wobei das Sicherungselement (6) zwischen einer Sicherungsposition, in welcher der Verbindungsbügel (5) die Seitenwand (2) derart umgreift, dass die Seitenwand (2) an dem Behälterboden (3, 19, 20) fixiert ist, und einer Freigabeposition rotierbar ist, in der die Seitenwand (2) freigebbar ist.

2. Rollbehälter nach Anspruch 1, **dadurch gekennzeichnet, dass** das Sicherungselement (6) in der Sicherungsposition in einer seitlichen Aussparung (18) des Behälterbodens (3, 19, 20) angeordnet ist.

3. Rollbehälter nach Anspruch 1 oder 2, **dadurch gekennzeichnet, dass** das Sicherungselement (6) zwei Führungsstifte (8) umfasst, welche jeweils in einer Bohrung des Behälterbodens (3, 19, 20) um die Führungsstiftlängsmittelachse rotierbar gelagert sind.

4. Rollbehälter nach Anspruch 3, **dadurch gekennzeichnet, dass** an die Bohrungen jeweils eine Führungsnut angrenzt, durch welche die Führungsstifte (8) in die Bohrungen einbringbar sind, wobei die Führungsstifte (8) in den Führungsnuten in Längserstreckungsrichtung der Führungsnuten verschiebbar gelagert sind.

5. Rollbehälter nach Anspruch 4, **dadurch gekennzeichnet, dass** sich die Führungsnuten in Rollbehälter-Hochrichtung nach unten und/oder in Rollbehälter-Querrichtung nach außen erstrecken.

6. Rollbehälter nach einem der Ansprüche 3 bis 5, **dadurch gekennzeichnet, dass** mindestens einer der Führungsstifte (8) in einer betreffenden der Bohrungen mittels eines Rasthakens sicherbar ist.

7. Rollbehälter nach einem der Ansprüche 1 bis 6, **dadurch gekennzeichnet, dass** das Sicherungselement (6) ein Rastelement (10) umfasst, welches in der Sicherungsposition derart an einem Rastgegenelement (11) des Behälterbodens (3, 19, 20) anliegt, dass das Sicherungselement (6) in der Sicherungsposition gesichert ist.

8. Rollbehälter nach Anspruch 7, **dadurch gekennzeichnet, dass** das Rastelement (10) sich in Richtung eines dem Rastgegenelement (11) zugewandten Endes verjüngt.

9. Rollbehälter nach einem der Ansprüche 1 bis 8, **dadurch gekennzeichnet, dass** das Bodenelement ein Führungselement (13) umfasst, an welchem das Sicherungselement (6) bei einer Bewegung zwischen der Sicherungsposition und der Freigabeposition sowie in der Freigabeposition anliegt.

10. Rollbehälter nach Anspruch 9, **dadurch gekennzeichnet, dass** das Führungselement (13) derart ausgestaltet ist, dass das Sicherungselement (6) bei einer Bewegung zwischen der Sicherungsposition und der Freigabeposition um die Führungsstiftlängsmittelachse der rotiert wird.

11. Rollbehälter nach Anspruch 9 oder 10 in Verbindung mit Anspruch 6 oder 7, **dadurch gekennzeichnet, dass** das Führungselement (13) an das Rastgegenelement in Rollbehälter-Hochrichtung oben angrenzt.

12. Rollbehälter nach einem der Ansprüche 1 bis 11, **dadurch gekennzeichnet, dass** das Sicherungselement (6) mittels einer Schraube oder eines Pins in der Sicherungsposition sicherbar ist (**gekennzeichnet durch** eine Schraube oder einen Pin, welche sich derart durch die Befestigungsanordnung (insbesondere das Sicherungselement) und den Behälterboden erstreckt und das Sicherungselement in der Sicherungsposition sichert.).

13. Rollbehälter nach einem der Ansprüche 1 bis 12, **dadurch gekennzeichnet, dass** das Sicherungselement (6) einen Lagerstift (9) umfasst, an welchem der Verbindungsbügel (5) um die Lagerstiftlängsmittelachse (9) des Lagerstifts (9) rotierbar gelagert ist.

14. Rollbehälter nach Anspruch 13, **dadurch gekennzeichnet, dass** sich der Lagerstift (9) in eine Richtung erstreckt, die einer Erstreckungsrichtung der Führungsstifte (8) entspricht, wobei die Lagerstiftlängsmittelachse von den Führungsstiftlängsmittelachsen beabstandet ist.

15. Rollbehälter nach einem der Ansprüche 1 bis 14, **dadurch gekennzeichnet, dass** der Verbindungsbügel (5) ein C-förmiges Querschnittprofil aufweist.

16. Rollbehälter nach einem der Ansprüche 1 bis 15, **dadurch gekennzeichnet, dass** das Sicherungselement (6) ein
Rotationsbegrenzungselement umfasst, das eine Rotationsbewegung des Verbindungsbügels (5) in eine erste Richtung begrenzt.

17. Rollbehälter nach einem der Ansprüche 1 bis 16, **gekennzeichnet durch** zwei, drei oder vier Seitenwände, welche jeweils von mindestens einer Befestigungsanordnung (4) an dem Behälterboden (3, 19, 20) fixiert sind.
